# EUROPEAN PATENT SPECIFICATION

(11) **EP 0 817 572 B1**
(45) Date of publication and mention of the grant of the patent: **17.05.2000**
(21) Application number: 96906738.8
(22) Date of filing: 04.03.1996
(51) Int. Cl.: A23D 9/00, A21D 2/16, A21D 10/04, A21D 13/08

(54) **BAKERY FAT COMPOSITION**
FETTZUSAMMENSETZUNG FÜR BÄCKEREI
COMPOSITION DE MATIERRE GRASSE POUR LA PATISSERIE

(30) Priority: 29.03.1995 EP 95200785
(43) Date of publication of application: 14.01.1998
(73) Proprietor: UNILEVER N.V., 3013 AL Rotterdam (NL); UNILEVER PLC, London EC4P 4BQ (GB)
(72) Inventor: ASHAUER, Karin, D-28203 Bremen (DE); HENTSCHEL, Michael, D-27777 Bookholzberg (DE); NEU, Dirk, D-27749 Delmenhorst (DE)
(74) Representative: van der Toorren, Johannes, Drs.
(86) International application number: EP9600929
(87) International publication number: WO9629882

(56) References cited:
- EP-A- 0 191 250
- EP-A- 0 219 424
- EP-A- 0 421 509
- EP-A- 0 509 579
- GB-A- 992 429
- US-A- 5 196 215
- CEREAL CHEMISTRY, vol. 59, no. 5, MINNEAPOLIS US, pages 389-392, XP002006179 C.C. LEE ET AL.: "Development of a laboratory-scale single-stage cake mix"
- FOOD TECHNOLOGY, vol. 45, no. 3, 1991, CHICAGO US, pages 116-132, XP002006180 JUDIE D. DZIEZAK: "A focus on gums"

## Description

Cake like bakery products are known for many years. Often these cake like products are provided with a layer of fruit pieces, such as cherries, plumbs, strawberries, raspberries, gooseberries, apricots, or peaches or parts or mixtures thereof. These fruit layers are applied to or on a premoulded cake batter before baking. One problem however remained unsolved so far, i.e. during the baking of the batter provided with the fruit layer, it was noticed that the fruit pieces migrated through the batter layer and assembled at the bottom of the baked product. This result was unsatisfactory, as the consumer prefers a baked product with the fruit layer on top or at least in the top layer of the cake layer. Therefore many fruit topped cake like bakery products, such as cakes, but in particular typical German products based on "Rührmassen", such as Blechkuchen, Rührkuchen or Kapseln suffered from above inconvenience, Therefore we performed a study in order to find ways that could overcome above problem. This study has resulted in the finding that the use of bakery fat compositions with a specific composition in the batter for these products could overcome this migration problem.

In US 5 196 215 fat-emulsions are disclosed, containing fat, polysccharides, emulsifiers and water and that are free of proteins. These emulsions can be applied in e.g. breaddough or cake batters to prevent softening of the dough by forming cavities and films, which prevent the transfer of water and oil.

So our invention concerns in the first instance a new bakery fat composition free of water, comprising:

| | |
|---|---|
| 90 - 98 wt% | of a liquid vegetable oil |
| 0.5- 5 wt% | of a hardened vegetable fat, having an IV < 20 and preferably containing: |
| | 2 - 90 wt% of C_{16:0} |
| | 2 - 70 wt% of C_{18:0} |
| | 0 - 12 wt% of C_{20:0} |
| | 0 - 55 wt% of C_{22:0} |
| | < 2.5 wt% of unsaturated fatty acid residues |
| 0.5- 2 wt% | of an emulsifying system, preferably containing mono- and/or diglycerides. |
| 0 - 2 wt% | of a lecithin |
| 0.1- 2.5 wt% | of a cold gelling thickener, preferably being xanthan gum. |

It was also found that by using above composition for the preparation also other advantages were obtained. E.g. it was found, that the oiling-out of the baked products was decreased, while also the control of the moisture content and of the freshness of the baked products was easier.

The liquid vegetable oil, that can be applied in our bakery fat composition preferably has a solid fat index (NMR-pulse, unstabilized) at 20°C of less than 5 and is preferably selected from the group consisting of: soybean oil, palm oil, rapeseed oil, sunflower oil, olive oil, safflower oil, high oleic vegetable oil or mixtures thereof.

The hardened vegetable fat can be selected from a wide range of hardened fats. However we prefer to apply hardened vegetable fats, or the saturated fractions of vegetable oils, such as palm-oil-stearin. Examples of these fats are hardened palm oil, palm oil stearin and hardened rapeseed oil.

The preferred hardened vegetable fat is hardened rapeseed oil m pt 70°C. This fat is preferably applied in amounts of 1.5-3 wt%. It was found that this component has also natural emulsifying properties, which are very helpful in our compositions.

The emulsifier system can be any food grade emulsifier. So including data-esters, monoglycerides, polyglycolethers, polysuchrose-esters, etc.

However we prefer to apply a blend of mono- and diglycerides high in saturated fatty acids with a distilled saturated monoglyceride with an IV < 20. We found, that the diglycerides play a profound roll in the control of the freshness of the baked products, while the moisture content of the cakes was strongly influenced by the presence of distilled (saturated) monoglycerides in our fat composition. Therefore we prefer to use an emulsifier system, wherein the mono- and diglycerides are present in a weight ratio of 3 : 1 to 1 : 3.
Although the lecithin could be absent, we prefer our fat composition to contain 0.5 - 1 wt% of lecithin. As lecithin any known lecithin can be applied, so including natural lecithin and chemically or enzymically converted lecithins or fractions or mixtures thereof.

The cold gelling thickener is an important ingredient of our new fats. Their function is to decrease or even to avoid the occurrence of migration of the fruit pieces through the batter during baking. The cold gelling thickener can be selected from e.g.: xanthan gum, guar gum, alginate, modified starches. If xanthan gum is applied it is used in amounts of 0.1 - 1.2 wt%, preferably 0.25 - 1 wt% (on fat) in the bakery fat. It was found that depending on the preparation procedure applied for the production of the bakery fat composition either a creamy consistency or a pumpable consistency could be obtained. Therefore our invention also concerns a bakery fat composition according to claims 1 - 8, having a creamy consistency with a Stevens value at 20°C of 250 - 400 and further concerns a bakery fat composition according to claims 1 - 8, having a pumpable rheology.

As stated before our bakery fat compositions can be applied for the production of batters for cake like bakery products.

A preferred batter for the production of cake like bakery products comprises:

| | |
|---|---|
| 5 - 30 wt% | of the composition according to claims 1 - 8 |
| 10 - 30 wt% | of a flour |
| 10 - 30 wt% | of egg, preferably whole egg |
| 15 - 40 wt% | of a sugar |
| 0 - 10 wt% | of milk protein |
| 0 - 20 wt% | of starch |
| 0.02- 2 wt% | of baking powder |

Our batters in general display a Stevens-value of 120 - 250 g at 20°C (using a probe of 4.4 mm, a probe-rate of 1 mm/sec. and a penetration depth of 25 mm).

The sugar component can be selected from the group consisting of: sucrose, glucose, fructose or maltodextrin.

The baking powder is suitably selected from the group consisting of: NaHCO₃, acidic phosphate salts, organic N₂ developing compounds, etc.

Above batters can be used for the production of our end products, so our invention also concerns: baked, premoulded cake-like bakery products, provided with a layer of fresh or cooked fruit pieces on or in the top layer of the product, wherein the product is obtained after moulding of the batter of claims 9 - 11 in a mould, providing the moulded batter with a layer of fruit and baking of the premoulded batter, provided with the fruit layer.

Above it was already indicated which function is added to our products by what component. Part of our inventive concept therefore is also: the use of a cold gelling thickener in a bakery fat composition, used for the production of the baked bakery products according to claim 12. wherein the cold gelling thickener is applied for the prevention of migration of the fruitpieces from the toplayer to the bottomlayer of the baked products.

According to another aspect of our inventive concept we found, that a hardened vegetable fat, in particular of hardened rapeseed oil m pt 70°C can be used in a bakery fat composition, used for the production of the baked bakery products according to claim 12, for the prevention of oiling-out of the baked bakery products, while a blend of mono- and diglycerides can be used in bakery fat compositions, used for the production of the baked bakery products according to claim 12, to control the moisture content of the baked products while the diglycerides can be applied to control the freshness of the baked products.

Our bakery fat compositions are made by a process, that depending on the exact conditions applied, can lead to a creamy or to a pumpable product. Important therefore is the selection of the temperature at which the product is collected and the amount of shear applied during the cooling of our premix.

Therefore also a process is claimed, which can be used for the preparation of our fat compositions. This process comprises the following steps:
(i) a premix is made from the components at 50 to 60°C.
(ii) the premix is pasteurized at 50-70°C and cooled to 25-50°C.
(iii) the cooled premix of (ii) is subjected to cooling under shear in-a surface scraped heat exchanger (A-unit) using 200 - 800 rpm, at a temperature of -10 to -30°C.
(iv) the product of (iii) is crystallized in a heat exchanger provided with a pin stirrer (C-unit) under a shear of 200 - 1500 rpm. The temperature of the end product is 2 - 20°C.
(v) the product of (iv), having a temperature of 2 - 20°C, is optionally subjected to a churning under a shear of 30 - 40 s⁻¹.
(vi) the product of (iv) or (v) is collected as a cream at 12 - 20°C or as a pumpable product at 2 - 4°C.

Throughputs normally applied can range from 0.1 - 7.5 ton per hour.

The use of a churner is optionally. The churner is preferably applied, if a network of fatcrystals is formed, which should be broken down.

### EXAMPLES

### I. Preparation of bakery fat

| Recipe: | Wt % |
|---|---|
| Vegetable oil mix (= rapeseed oil : palm oil = 2 : 1) | 95.3 |
| Hardened vegetable oil (rapeseed oil m pt 70°C) | 1.8 |
| Admul ® 4203 (Quest International) | 1.0 |
| Hymono ® 8803 (Quest International) | 0.5 |
| Lecithin | 0.8 |
| Xanthan gum | 0.5 |
| Colourant | 0.002 |
| Flavours | 0.03 |

A premix was made at 50 - 60°C. The premix was pasteurized at 60°C and cooled to 40°C. The cooled premix was cooled in 2 A-units, using exit-temperatures of -20°C and -15°C. During this cooling a shear of 250 rpm was applied.

The cooled product was subjected to a crystallization in a C-unit, using a shear of 600 rpm. The troughput was 3.5 ton/hour.

The product was collected under nitrogen at a temperature of 14.5°C. The product had a Stevens-value at 20°C of: 325 g (Stevens-analyzer: probe: 4.4 mm : rate 1 mm/sec., penetration depth: 25 mm).

### II Preparation of a basic batter

The components according to the following recipe were mixed at 18 - 22°C during 3 - 5 min. until a litre weight of about 900 g/l was obtained.

| Recipe for batter | weight in g |
|---|---|
| fat composition of ex 1 | 2.400 |
| sugar | 2.200 |
| eggs | 2.200 |
| wheat-flour | 2.000 |
| starch | 800 |
| baking powder | 60 |
| salt | 10 |
| The batter displayed a Stevens-value of 200 g at 20°C. | |

### III Preparation of a cake

| | |
|---|---|
| 750 g | of the batter of example II were used to fill an aluminium baking tin provided with a high rim. The surface of the batter was smoothed away. |
| 280 g | of cherries and 100 g of cake flakes were brought on top of the batter. |

The cake was baked in an oven at 180°C for 50 minutes.

After baking the cake was provided with an apricotjam layer and a sugar icing.

## Claims

1. Bakery fat composition free of water, comprising:
| | |
|---|---|
| 90 - 98 wt% | of a liquid vegetable oil |
| 0.5- 5 wt% | of a hardened vegetable fat, having an IV < 20 and preferably containing: |
| | 2 - 90 wt% of C_{16:0} |
| | 2 - 70 wt% of C_{18:0} |
| | 0 - 12 wt% of C_{20:0} |
| | 0 - 55 wt% of C_{22:0} |
| | < 2.5 wt% of unsaturated fatty acid residues |
| 0.5- 2 wt% | of an emulsifying system, preferably containing mono- and/or diglycerides. |
| 0 - 2 wt% | of a lecithin |
| 0.1- 2.5 wt% | of a cold gelling thickener, preferably being xanthan gum. |

2. Bakery fat composition according to claim 1, wherein the liquid vegetable oil has a solid fat index (NMR-pulse, unstabilized) at 20°C of less than 5 and preferably is selected from the group consisting of: soybean oil, palm oil, rapeseed oil, sunflower oil, olive oil, safflower oil, high oleic vegetable oil or mixtures thereof.

3. Bakery fat composition according to claim 1, wherein the hardened vegetable fat is hardened rapeseed oil with a melting point of 70°C (= h.Rp-70), which is present in an amount of 1.5-3 wt%.

4. Bakery fat composition according to claims 1 - 3, wherein the emulsifier systems comprises a blend of mono- and diglycerides high in saturated fatty acids with a distilled saturated monoglyceride with an IV < 20.

5. Bakery fat composition according to claim 4, wherein the mono- and diglycerides present in the blend have a weight ratio of 3 : 1 to 1 : 3.

6. Bakery fat composition according to claims 1 - 5, wherein 0.5 - 1 wt% of a natural lecithin, or a chemically of enzymically converted lecithin or fractions or mixtures thereof, is present.

7. Bakery fat composition according to claims 1 - 7 wherein the cold gelling thickener is selected from the group consisting of xanthan gum, guar, alginate, modified starches.

8. Bakery fat composition according to claims 1 - 7 wherein xanthan gum is present in an amount of 0.1 - 1.2 wt%, preferably 0.25 - 1 wt%.

9. Batter for the production of cake-like bakery products, comprising:
| | |
|---|---|
| 5 - 30 wt% | of the composition according to claims 1 - 8 |
| 10 - 30 wt% | of a flour |
| 10 - 30 wt% | of egg, preferably whole egg |
| 15 - 40 wt% | of a sugar |
| 0 - 10 wt% | of milk protein |
| 0 - 20 wt% | of starch |
| 0.02 - 2 wt% | of baking powder |

10. Batter according to claim 9, wherein the sugar is selected from the group consisting of: sucrose, glucose, fructose or maltodextrin.

11. Batter according to claims 9 - 10, wherein the baking powder is selected from the group consisting of: NaHCO₃ and acidic phosphate salts.

12. Baked, premoulded cake-like bakery products, provided with a layer of fresh or cooked fruit pieces on or in the top layer of the product, wherein the product is obtained after moulding of the batter of claims 9 - 11 in a mould, providing the moulded batter with a layer of fruit and baking of the premoulded batter, provided with the fruit layer.

13. Bakery fat composition according to claims 1 - 8, having a creamy consistency with a Stevens value at 20°C of 250 - 400 g.

14. Bakery fat composition according to claims 1 - 8, having a pumpable rheology.

15. Batter with the composition according to claims 9 - 11 having a Stevens-value of 120 - 250 g at 20°C.

16. Process for the preparation of a bakery fat composition with the composition of claims 1 - 8 wherein:
(i) a premix is made from the components at 50 to 60°C.
(ii) the premix is pasteurized at 50 - 70 °C and cooled to a temperature of 25 to 50°C.
(iii) the cooled premix of (ii) is subjected to cooling under shear in a surface scraped heat exchanger (A-unit) using 200 - 800 rpm, at a temperature of -10 to -30°C.
(iv) the product of (iii) is crystallized in a heat-exchanger, provided with a pin stirrer (C-unit) under a shear of 200 - 1500 rpm, while the temperature of the product is maintained at 2 - 20°C.
(v) the product of (iv), having a temperature of 2 - 20°C, is optionally subjected to a churning under a shear of 30 - 40 s⁻¹.
(vi) the product of (iv) or (v) is collected as a cream at 12 - 20°C or as a pumpable product at 2 - 4°C.

## Patentansprüche

1. Wasserfreie Fettzusammensetzung für die Bäckerei, umfassend:
90 - 98 Gew-% eines flüssigen Pflanzenöls,
0,5 - 5 Gew-% eines gehärteten Pflanzenfetts mit einer IV < 20 und vorzugsweise enthaltend:
2 - 90 Gew-% C_{16:0,}
2 - 70 Gew-% C_{18:0,}
0 - 12 Gew-% C_{20:0,}
0 - 55 Gew-% C_{22:0,}
< 2,5 Gew-% ungesättigte Fettsäurereste,
0,5 - 2 Gew.% eines emulgierenden Systems, das vorzugsweise Mono- und/oder Diglyceride enthält,
0 - 2 Gew-% eines Lecithins und
0,1 - 2,5 Gew-% eines kaltgelierenden Verdickungsmittels, das vorzugsweise Xanthangummi ist.

2. Fettzusammensetzung für die Bäckerei gemäß Anspruch 1, worin das flüssige Pflanzenöl bei 20°C einen Festfettindex (NMR-Puls, unstabilisiert) von weniger als 5 aufweist und vorzugsweise aus der Gruppe ausgewählt ist, die besteht aus: Sojaöl, Palmöl, Rapssamenöl, Sonnenbluemnöl, Olivenöl, Safloröl, Pflanzenöl mit hohem Oleingehalt oder Mischungen hiervon.

3. Fettzusammensetzungen für die Bäckerei gemäß Anspruch 1, worin das gehärtete Pflanzenfett gehärtetes Rapssamenöl mit einem Schmelzpunkt von 70°C (= h.Rp-70) ist, das in einer Menge von 1,5 - 3 Gew-% vorliegt.

4. Fettzusammensetzung für die Bäckerei gemäß den Ansprüchen 1 bis 3, worin das emulgierende System eine Mischung von Mono- und Diglyceriden mit hohem Gehalt an gesättigten Fettsäuren und einem destilierten gesättigten Monoglycerid mit einem IV < 20 umfaßt.

5. Fettzusammensetzung für die Bäckerei gemäß Anspruch 4, worin die in der Mischung vorliegenden Mono- und Diglyceride ein Gewichtsverhältnis von 3 : 1 bis 1 : 3 aufweisen.

6. Fettzusammensetzung für die Bäckerei gemäß den Ansprüchen 1 bis 5, worin 0,5 - 1 Gew-% eines natürlichen Lecithins oder eines chemisch oder enzymatisch umgewandelten Lecithins oder Fraktionen oder Mischungen hiervon vorliegen.

7. Fettzusammensetzung für die Bäckerei gemäß den Ansprüchen 1 bis 7, worin das kaltgelierende Verdickungsmittel aus der Gruppe ausgewählt ist, die aus Xanthangummi, Guar, Alginat und modifizierten Stärken besteht.

8. Fettzusammensetzung für die Bäckerei gemäß den Ansprüchen 1 bis 7, worin Xanthangummi in einer Menge von 0,1 - 1,2 Gew-%, vorzugsweise 0,25 - 1 Gew-%, vorliegt.

9. Teig zur Herstellung von kuchenähnlichen Bäckereiprodukten umfassend:
5 - 30 Gew-% der Zusammensetzung gemäß den Ansprüchen 1 bis 8,
10 - 30 Gew-% eines Mehls,
10 - 30 Gew-% an Ei, vorzugsweise Vollei,
15 - 40 Gew-% eines Zuckers,
0 - 10 Gew-% Milchprotein,
0 -20 Gew-% Stärke und
0,02 - 2 Gew-% Backpulver.

10. Teig gemäß Anspruch 9, worin der Zucker aus der Gruppe ausgewählt ist, die besteht aus: Saccharose, Glucose, Fructose oder Maltodextrin.

11. Teig gemäß den Ansprüchen 9 bis 10, worin das Backpulver aus der Gruppe ausgewählt ist, die besteht aus: NaHCO₃ und sauren Phosphatsalzen.

12. Gebackene, vorgeformte, kuchenähnliche Bäckereiprodukte, die mit einer Schicht von frischen oder gekochten Fruchtstücken auf oder in der obersten Schicht des Produkts versehen sind, worin das Produkt nach dem Formen des Teigs gemäß den Ansprüchen 9 bis 11 in einer Form, Versehen des geformten Teigs mit einer Schicht von Früchten und Backen des vorgeformten, mit der Fruchtschicht versehenen Teigs, erhalten wird.

13. Fettzusammensetzung für die Bäckerei gemäß den Ansprüchen 1 bis 8, die eine cremige Konsistenz mit einem Stevens-Wert bei 20°C von 250 - 400 g aufweist.

14. Fettzusammensetzung für die Bäckerei gemäß den Ansprüchen 1 bis 8, die eine pumpfähige Rheologie aufweist.

15. Teig mit der Zusammensetzung gemäß den Ansprüchen 9 bis 11 mit einem Stevens-Wert bei 20°C von 120 - 250 g.

16. Verfahren zur Herstellung einer Fettzusammensetzung für die Bäckerei mit der Zusammensetzung gemäß den Ansprüchen 1 bis 8, worin:
(i) bei 50 - 60°C eine Vormischung aus den Komponenten hergestellt wird;
(ii) die Vormischung bei 50 - 70°C pasteurisiert wird und auf eine Temperatur von 25 - 50°C abgekühlt wird;
(iii) die abgekühlte Vormischung aus (ii) bei einer Temperatur von -10 bis -30°C in einem Kratzwärmetauscher (A-Einheit) unter Verwendung von 200 - 800 U/min einer Kühlung unter Schereinwirkung ausgesetzt wird;
(iv) das Produkt aus (iii) in einem mit einem Stiftrührer ausgestatteten Wärmeaustauscher (C-Einheit) unter einer Schereinwirkung von 200 - 1500 U/min kristallisiert wird, während die Temperatur des Produkts bei 2 - 20°C gehalten wird;
(v) das Produkt aus (iv) mit einer Temperatur von 2 - 20°C gegebenenfalls einer Verkirnung unter einer Schereinwirkung von 30 - 40 s⁻¹ unterworfen wird und
(vi) das Produkt aus (iv) oder (v), bei 12 - 20°C als Rahm oder bei 2 - 4°C als pumpfähiges Produkt gesammelt wird.

## Revendications

1. Composition de graisse boulangère exempte d'eau, comprenant :
90 à 98% en poids d'une huile végétale liquide
0,5 à 5% en poids d'une graisse végétale durcie, ayant une VI < 20 et, contenant de préférence :
2 à 90% en poids de C_{16:0}
2 à 70% en poids de C_{18:0}
0 à 12% en poids de C_{20:0}
0 à 55% en poids de C_{22:0}
< 2,5% en poids de résidus d'acides gras insaturés
0,5 à 2% en poids d'un système émulsifiant, contenant de préférence des mono et/ou diglycérides
0 à 2% en poids d'une lécithine
0,1 à 2,5% en poids d'un épaississant gélifiant à froid, de préférence une gomme de xanthane.

2. Composition de graisse boulangère selon la revendication 1, dans laquelle l'huile végétale liquide a un indice de graisses solides (impulsion RMN, pas de stabilisation) à 20°C de moins de 5 et de préférence, on la choisit parmi l'huile de soja, l'huile de palme, l'huile de colza, l'huile de tournesol, l'huile d'olive, l'huile de carthame, l'huile végétale hautement oléique ou leurs mélanges.

3. Composition de graisse boulangère selon la revendication 1, dans laquelle la graisse végétale durcie est l'huile de colza durcie avec un point de fusion de 70°C (h.Rp-70) qui est présente en une quantité de 1,5 à 3% en poids.

4. Composition de graisse boulangère selon les revendications 1 à 3, dans laquelle le système émulsifiant comprend un mélange de mono et diglycérides riches en acides gras saturés avec un monoglycéride saturé distillé avec une VI < 20.

5. Composition de graisse boulangère selon la revendication 4, dans laquelle les mono et diglycérides présents dans le mélange ont un rapport pondéral de 3:1 à 1:3.

6. Composition de graisse boulangère selon les revendications 1 à 5, dans laquelle est présent 0,5 à 1% en poids d'une lécithine naturelle ou d'une lécithine à conversion chimique ou enzymatique ou des fractions ou des mélanges de celles-ci.

7. Composition de graisse boulangère selon les revendications 1 à 7, dans laquelle l'épaississant gélifiant à froid est choisi parmi la gomme de xanthane, le guar, l'alginate, les amidons modifiés.

8. Composition de graisse boulangère selon les revendications 1 à 7, dans laquelle la gomme de xanthane est présente en une quantité de 0,1 à 1,2% en poids, de préférence 0,25 à 1% en poids.

9. Pâte pour la production de produits boulangers analogues aux cakes, comprenant :
5 à 30% en poids de la composition selon les revendications 1 à 8,
10 à 30% en poids d'une farine,
10 à 30% en poids d'oeuf, de préférence d'oeuf entier
15 à 40% en poids de sucre
0 à 10% en poids de protéine de lait
0 à 20% en poids d'amidon
0,02 à 2% en poids de levure en poudre

10. Pâte selon la revendication 9, dans laquelle le sucre est choisi parmi le saccharose, le glucose, le fructose ou la maltodextrine.

11. Pâte selon la revendication 9 ou 10, dans laquelle la levure en poudre est choisie parmi NaHCO₃ et les sels de phosphates acides.

12. Produits boulangers analogues aux cakes cuits, pré-moulés ayant une couche de morceaux de fruits cuits ou frais sur ou dans la couche supérieure du produit, dans lesquels on obtient le produit après moulage de la pâte selon les revendications 9 à 11 dans un moule, répartition d'une couche de fruits dans la pâte moulée et cuisson de la pâte pré-moulée, avec la couche de fruits.

13. Composition de graisse boulangère selon les revendications 1 à 8, ayant une consistance crémeuse avec une valeur STEVENS à 20°C de 250 à 400 g.

14. Composition de graisse boulangère selon les revendications 1 à 8, ayant une rhéologie qui la rend apte à être pompée.

15. Pâte avec la composition selon les revendications 9 à 11, ayant une valeur STEVENS de 120 à 250 g à 20°C.

16. Procédé de préparation d'une composition de graisse boulangère avec la composition selon les revendications 1 à 8, dans lequel :
(i) on prépare un pré-mélange à partir des composants à 50 à 60°C .
(ii) on pasteurise le pré-mélange à 50-70°C et on refroidit à 25-50°C.
(iii) on soumet le pré-mélange refroidi de (ii) à un refroidissement sous cisaillement dans un échangeur de chaleur à surface raclée (unité A) à 200-800 t/min, à une température de -10 à -30°C.
(iv) on fait cristalliser le produit de (iii) dans un échangeur de chaleur muni d'un agitateur à broches (unité C) sous un cisaillement de 200 à 1500 t/min tout en maintenant la température du produit final à 2 à 20°C.
(v) on soumet facultativement le produit de (iv) ayant une température de 2 à 20°C à un barattage sous un cisaillement de 30 à 40 s⁻¹.
(vi) on recueille le produit de (iv) ou (v) sous forme d'une crème à 12-20°C ou sous forme d'un produit qu'on peut pomper à 2 à 4°C.
